# EUROPEAN PATENT SPECIFICATION

(11) **EP 4 199 228 B1**
(45) Date of publication and mention of the grant of the patent: **18.06.2025**
(21) Application number: 22736940.2
(22) Date of filing: 11.01.2022
(51) Int. Cl.: H01M 50/383, H01M 50/59, H01M 50/507, H01M 50/249, H01M 50/211, H01M 50/209, H01M 10/42

(54) **BATTERY MODULE AND BATTERY PACK COMPRISING SAME**
BATTERIEMODUL UND BATTERIEPACK DAMIT
MODULE DE BATTERIE ET BATTERIE LE COMPRENANT

(30) Priority: 11.01.2021 KR 20210003529
(43) Date of publication of application: 21.06.2023
(73) Proprietor: LG Energy Solution, Ltd., Seoul 07335 (KR)
(72) Inventor: KIM, Seung-Hyun, Daejeon 34122 (KR); KONG, Yu-Dam, Daejeon 34122 (KR); SHIN, Jin-Kyu, Daejeon 34122 (KR); OH, Young-Hoo, Daejeon 34122 (KR); OK, Seung-Min, Daejeon 34122 (KR); JO, Sang-Hyun, Daejeon 34122 (KR); HONG, Sung-Goen, Daejeon 34122 (KR)
(74) Representative: Hoffmann Eitle
(86) International application number: PCT/KR2022/000499
(87) International publication number: WO 2022/149963

(56) References cited:
- WO-A1-2020/138110
- WO-A1-2020/207329
- WO-A1-2020/207329
- JP-A- 2012 212 593
- KR-A- 20170 035 218
- KR-A- 20170 035 218
- KR-A- 20180 035 174
- KR-A- 20190 064 887
- KR-A- 20190 096 674
- KR-A- 20220 003 876
- US-A1- 2018 048 033
- US-A1- 2019 214 624
- US-A1- 2020 058 912

## Description

### TECHNICAL FIELD

The present disclosure relates to a battery module, a battery pack including the same, and an energy storage system (ESS) and a vehicle including the battery pack. More particularly, the present disclosure relates to a battery module having a structure capable of, when venting of a battery cell occurs, discharging gas to the outside, preventing a spark containing high-temperature electrode active material and metal particles from leaking to the outside of the battery module, and preventing oxygen from being introduced into the battery module to prevent a fire in the battery module, a battery pack including the battery module, and an ESS and a vehicle including the battery pack.

### BACKGROUND ART

A battery pack applied to an energy storage system (ESS) and/or an electric vehicle may be manufactured to include a plurality of battery modules to which high-power and high-capacity lithium secondary batteries are applied. In order to satisfy the output power characteristics of a battery pack required by an ESS and/or an electric vehicle and realize high capacity, the number of lithium secondary batteries included in one battery module may be increased, and the number of battery modules included in one battery pack may be increased.

However, when a fire or explosion occurs in a battery pack including such a large number of lithium secondary batteries, damage is inevitably increased.

A fire occurring in a battery pack starts from an abnormal temperature rise and internal gas generation of a lithium secondary battery in a battery module. When a temperature of a lithium secondary battery abnormally rises and internal gas is generated, and thus internal pressure of the lithium secondary battery increases to a certain level or higher, venting of the lithium secondary battery occurs, and thus, high-temperature gas is ejected to the outside of the lithium secondary battery, and a high-temperature spark containing electrode active material and aluminum particles is ejected.

In order to ensure the safety in use of a battery module and/or a battery pack, venting gas should be able to be rapidly discharged to the outside of the battery module so that internal pressure of the battery module is no longer increased when an event occurs. However, when a high-temperature spark is discharged along with the venting gas to the outside of the battery module, the venting gas, the high-temperature spark, and oxygen may meet to cause a fire.

Accordingly, there is a demand to develop a battery module having a structure capable of, even when thermal runaway occurs due to abnormality such as a short circuit in a battery cell, rapidly discharging venting gas to the outside of the battery module and effectively preventing a high-temperature spark containing electrode active material and aluminum particles from leaking to the outside.

Also, when a structure such as a bus bar frame applied to prevent a short circuit between a plurality of lithium secondary batteries is damaged due to continuous contact with a spark and high-temperature gas, oxygen may be easily introduced from the outside of the battery module into the battery module, and a fire may even spread into the battery module. Also, when the bus bar frame is damaged, electrode leads of adjacent lithium secondary batteries which are kept apart from each other due to the bus bar frame may contact each other, and an event may spread.

Accordingly, there is a demand to develop a battery module having a structure capable of, even when some structures are damaged due to a spark and high-temperature gas, preventing a free inflow of external oxygen and preventing an event from spreading due to a short circuit between adjacent lithium secondary batteries.

US 2019/214624 A1 relates to a spacer and battery pack. The battery pack includes a stacked body obtained by stacking a plurality of unit cells. A pressurizing unit includes an upper plate, a lower plate, and left and right side plates 123. A bus bar unit includes a bus bar holder that integrally holds a plurality of bus bars, wherein the bus bars electrically interconnect vertically adjacent electrode tabs of the unit cells.

KR 2017 0035218 A concerns a battery module, a battery pack including such a battery module, and an automobile including such a battery pack. The battery module includes a battery cell assembly including battery cells, an end plate and side plates. A lead cover includes a bus bar electrically connecting a plurality of electrode leads.

WO 2020/207329 A1 concerns a shield, battery unit assembly, battery module and vehicle. A protective plate including a plurality of guide grooves is fixed to the battery module. The guide groove is used to guide the flow direction of the flame ejected from the battery cell.

### DISCLOSURE

### Technical Problem

The present disclosure is designed to solve the problems of the related art, and therefore the present disclosure is directed to providing a battery module having a structure capable of, when an internal event occurs, rapidly discharging venting gas, effectively preventing a high-temperature spark from leaking to the outside, and after the venting gas is discharged, preventing external air from being introduced into the battery module.

The present disclosure is also directed to providing a battery module having a structure capable of, even when some structures are damaged due to high-temperature gas and sparks, preventing external oxygen from being easily introduced into the battery module and preventing a short circuit between adjacent lithium secondary batteries.

However, the technical purpose to be solved by the present disclosure is not limited to the above, and other objects not mentioned herein will be clearly understood by one of ordinary skill in the art from the following disclosure.

### Technical Solution

A battery module according to the present invention is defined in claim 1 and includes: a cell stack in which a plurality of battery cells are vertically stacked; a module housing including a base plate supporting the cell stack and a pair of side plates covering both side portions of the cell stack; and a bus bar frame assembly covering an opening portion formed on a side of the module housing in a longitudinal direction of the module housing, wherein each of the pair of side plates includes: a plurality of spark delay protrusions protruding from an inner surface of the side plate; and a plurality of spark delay concave portions recessed from the inner surface of the side plate.

Each of the pair of side plates includes a spark direction changing portion formed by bending an end portion of the side plate in a longitudinal direction toward the cell stack.

The opening portion may be formed between a pair of spark direction changing portions respectively provided on the pair of side plates, wherein an electrode lead of the battery cell is exposed to outside of the module housing through the opening portion.

The bus bar frame assembly may include: a bus bar frame covering the opening portion, and including a plurality of frame slits through which an electrode lead of the battery cell passes; and at least one bus bar located on an outer surface of the bus bar frame and coupled to the electrode lead passing through the frame slit.

The battery module may further include a fire-proof sheet assembly located between the bus bar frame assembly and the cell stack and coupled to the bus bar frame assembly.

The fire-proof sheet assembly may include a fire-proof sheet including a plurality of sheet slits through which an electrode lead of the battery cell passes.

The fire-proof sheet assembly may further include a sheet cover including a plurality of cover slits through which the electrode lead of the battery cell passes, and covering the fire-proof sheet.

The fire-proof sheet may be a mica sheet.

The sheet cover may completely cover the fire-proof sheet so that the fire-proof sheet is not exposed to external air.

Each of the plurality of cover slits may have a shape whose width decreases toward the bus bar frame assembly.

Each of the plurality of spark delay protrusions and each of the plurality of spark delay concave portions may extend in a height direction of the side plate, and extend to a length corresponding to the stacked height of the cell stack.

The plurality of spark delay protrusions and the plurality of spark delay concave portions may be alternately formed from a central portion to an end portion of the side plate in a longitudinal direction of the side plate.

A battery pack according to the present invention is defined in claim 12 and includes the above battery module.

An energy storage system (ESS) according to the present invention is defined in claim 13 and includes the above battery pack.

A vehicle according to the present invention is defined in claim 14 and includes the above battery pack.

### Advantageous Effects

According to an aspect of the present disclosure, even when some structures are damaged due to a spark and high-temperature gas caused by an event, venting gas may be rapidly discharged, a high-temperature spark may be effectively prevented from leaking to the outside, and after the venting gas is discharged, external air may be prevented from being introduced into a battery module.

According to another aspect of the present disclosure, even when some structures are damaged due to high-temperature gas and sparks, external oxygen may be prevented from being easily introduced into a battery module and a short circuit between adjacent lithium secondary batteries may be prevented.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating a battery module according to an embodiment of the present disclosure.
FIG. 2 is a plan view illustrating a state where a bus bar frame assembly and a fire-proof sheet assembly are removed from the battery module of FIG. 1.
FIG. 3 is a partial cross-sectional view illustrating the battery module of FIG. 1.
FIG. 4 is a view illustrating a state where a bus bar frame assembly and a fire-proof sheet assembly are coupled to a module housing according to the present disclosure.
FIG. 5 is an exploded perspective view illustrating a part of a module housing, a bus bar frame assembly, and a fire-proof sheet assembly according to the present disclosure.
FIG. 6 is a view illustrating a fire-proof sheet assembly according to the present disclosure.
FIG. 7 is a view illustrating a shape of an inner surface of a side plate of a module housing according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure.

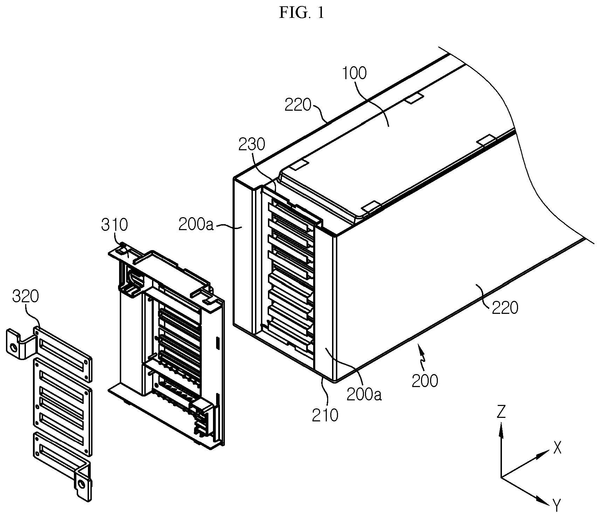

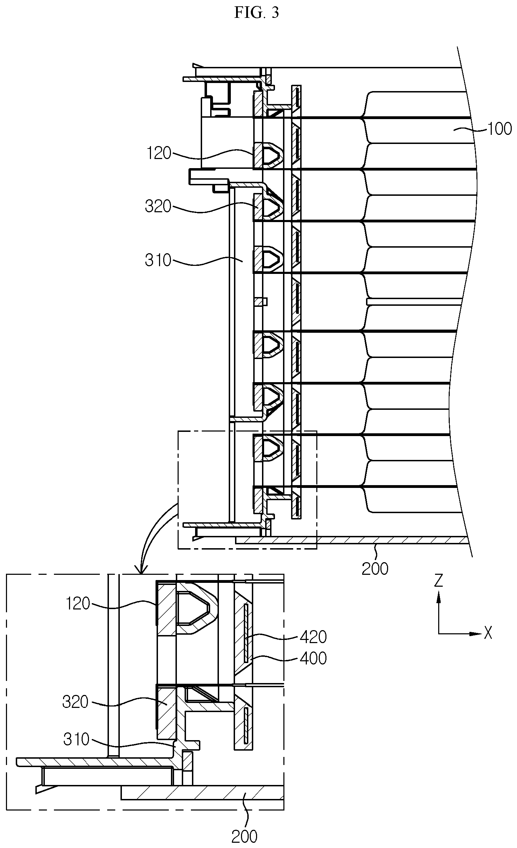

Referring to FIGS. 1 through 3, a battery module according to an embodiment of the present disclosure includes a cell stack in which a plurality of battery cells 100 are stacked in a vertical direction (direction parallel to a Z-axis), a module housing 200 in which the cell stack is accommodated, and a bus bar frame assembly 300 covering an opening portion formed on a side of the module housing 200 in a longitudinal direction (direction parallel to an X-axis) of the module housing 200. The battery module may further include, in addition to the above elements, a fire-proof sheet assembly 400 located between the bus bar frame assembly 300 and the cell stack and coupled to the bus bar frame assembly 300.

The battery cell 100 may be a pouch-type battery cell. In this case, the battery cell 100 includes an electrode assembly (not shown), a pouch case 110 in which the electrode assembly is accommodated, and a pair of electrode leads 120 connected to the electrode assembly and drawn out of the pouch case 110. The pair of electrode leads 120 are drawn in opposite directions in a longitudinal direction (direction parallel to the X-axis) of the battery cell 100.

The module housing 200 includes a base plate 210 supporting the cell stack and a pair of side plates 220 covering both side portions of the cell stack. Each of the pair of side plates 220 includes a spark direction changing portion 200a formed by bending an end portion of the side plate 220 in a longitudinal direction toward the cell stack.

The opening portion formed on a side of the module housing 200 in the longitudinal direction of the module housing 200 is formed between a pair of spark direction changing portions 200a respectively provided on the pair of side plates 220. The electrode lead 120 of the battery cell 100 may be exposed to the outside of the module housing 200 through the opening portion formed between the pair of spark direction changing portions 200a.

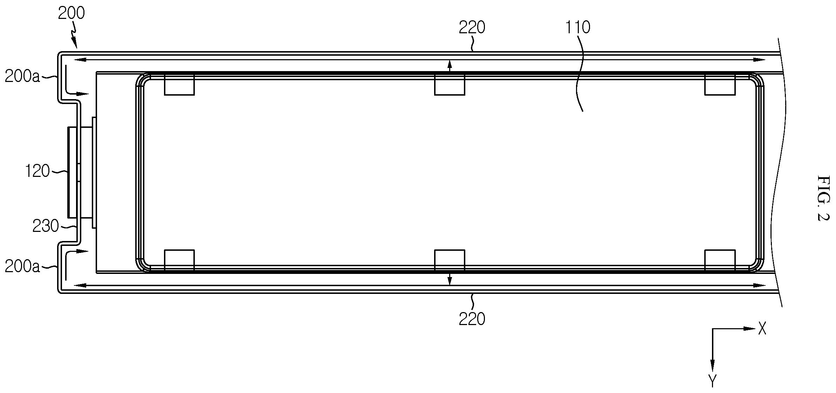

Because the battery module according to an embodiment of the present disclosure includes the spark direction changing portion 200a as described above, a high-temperature spark discharged during venting of the battery cell 100 is prevented from being ejected to the outside of the module housing 200 in the longitudinal direction of the module housing 200. That is, a high-temperature spark ejected through both side portions of the battery cell 100 in a width direction (direction parallel to a Y-axis) of the battery cell 100 of the cell stack during venting of the battery cell 100 moves toward an end portion and/or the other end portion of the battery module in a longitudinal direction (direction parallel to the X-axis) of the battery module and then switches a moving direction toward the cell stack (see an arrow direction of FIG. 2). Accordingly, the spark direction changing portion 200a prevents a spark from being discharged to the outside of the battery module through opening portions on both sides of the module housing 200 in the longitudinal direction (direction parallel to the X direction) of the module housing 200.

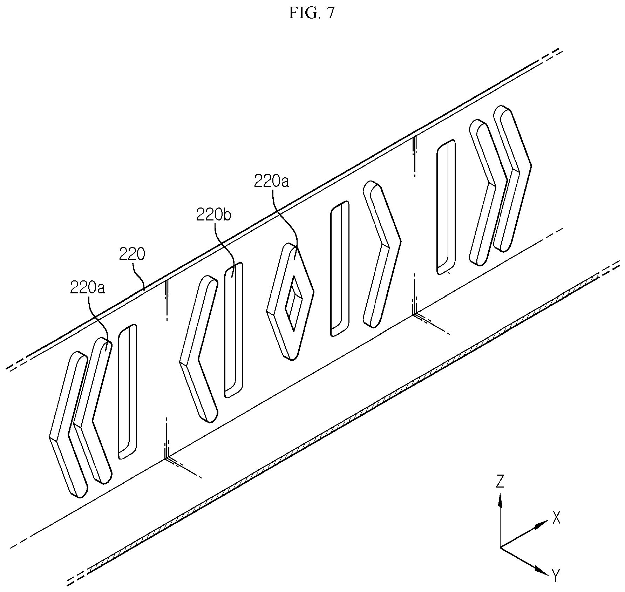

Referring to FIG. 7, the side plate 220 of the module housing 200 includes a plurality of spark delay protrusions 220a and a plurality of spark delay concave portions 220b, in addition to the spark direction changing portion 200a described above. The spark delay protrusion 220a protrudes from an inner surface of the side plate 220. The spark delay concave portion 220b is recessed from the inner surface of the side plate 220.

The spark delay protrusion 220a and the spark delay concave portion 220b extend in a height direction (direction parallel to the Z-axis) of the side plate 220. The spark delay protrusion 220a and the spark delay concave portion 22b extend to a length corresponding to a stacked height of the cell stack 100.

The spark delay protrusion 220a and the spark delay concave portion 220b may be alternately formed from a central portion to an end portion of the side plate 220 in the longitudinal direction (direction parallel to the X-axis) of the side plate 220. Likewise, the spark delay protrusion 220a and the spark delay concave portion 220b may alternately formed from the central portion to the other end portion of the side plate 220 in the longitudinal direction (direction parallel to the X-axis) of the side plate 220.

When a spark containing electrode active material and aluminum particles ejected through both side portions of the battery cell 100 in the width direction (direction parallel to the Y-axis) of the battery cell 100 moves in the longitudinal direction (direction parallel to the X-axis) of the side plate 220, the spark delay protrusion 220a and the spark delay concave portion 220b increase a path and obstruct the spark. Accordingly, the spark delay protrusion 220a and the spark delay concave portion 220b may prevent, along with the spark direction changing portion 200a described above, a spark from leaking to the outside of the battery module through the opening portions on both sides of the module housing 200 in the longitudinal direction (direction parallel to the X-axis) of the module housing 200. The battery module according to an embodiment of the present disclosure may include only the spark delay protrusion 220a and the spark delay concave portion 220b, without including the spark direction changing portion 200a.

The module housing 200 may further include a fastening frame 230 connecting one pair of spark direction changing portions 200a and having an empty central portion. The fastening frame 230 is located between the bus bar frame assembly 300 and the fire-proof sheet assembly 400. When the fastening frame 230 is provided, the bus bar frame assembly 300 and the fire-proof sheet assembly 400 may be closely attached to the fastening frame 230, and may be fastened to each other through the empty central portion of the fastening frame 230.

Although not shown, the opening portions of the module housing 200 of the present disclosure may be formed on both sides of the module housing 200 in the longitudinal direction of the module housing 200. In this case, the pair of spark direction changing portions 200a may also be provided on a side and the other side of the module housing 200 in the longitudinal direction of the module housing 200.

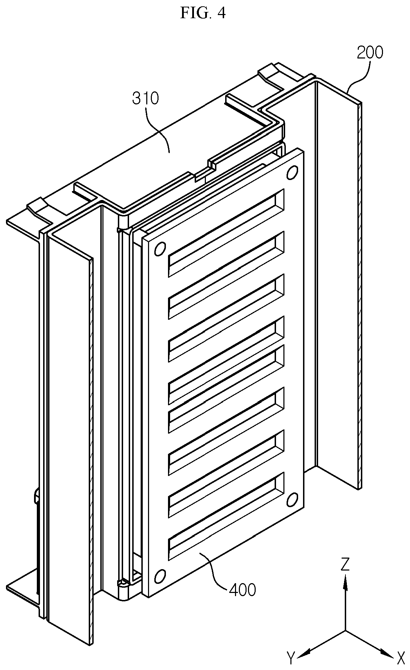

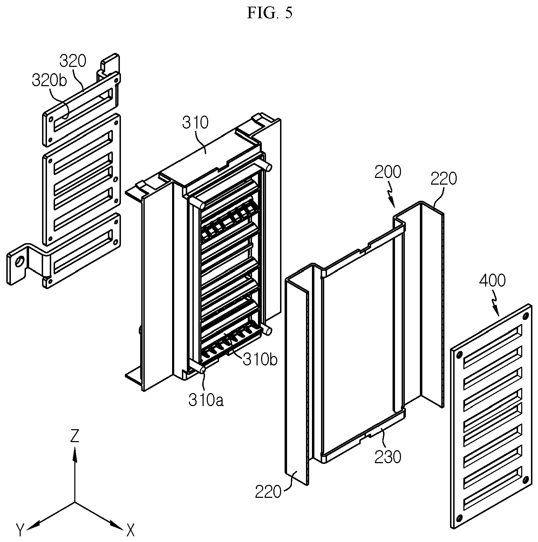

Referring to FIGS. 1 through 5, the bus bar frame assembly 300 includes a bus bar frame 310 and at least one bus bar 320. A pair of bus bar frame assemblies 300 may be provided, and in this case, the pair of bus bar frame assemblies 300 respectively cover the opening portion formed on a side and the opening portion formed on the other side of the module housing 200 in the longitudinal direction (direction parallel to the X-axis) of the module housing 200.

The bus bar frame 310 covers the opening portion of the module housing 200 and includes a plurality of frame slits 310b through which the electrode lead 120 of the battery cell 100 passes. The bus bar frame 310 may further include at least one frame protrusion 310a for coupling with the fire-proof sheet assembly 400.

The bus bar frame 310 has a shape corresponding to an end portion and/or the other end portion of the module housing 200 in the longitudinal direction of the module housing 200 and is closely attached to the module housing 200. When the module housing 200 includes the fastening frame 230 as described above, the bus bar frame 310 is closely attached to the spark direction changing portion 200a and the fastening frame 230.

The bus bar 320 is located on an outer surface of the bus bar frame 310, and is coupled to the electrode lead 120 passing through the frame slit 310b, to electrically connect the plurality of battery cells 100. The bus bar 320 may include a bus bar slit 320b through which the electrode lead 120 passes. In this case, the bus bar slit 320b and the frame slit 310b may be formed at positions corresponding to each other.

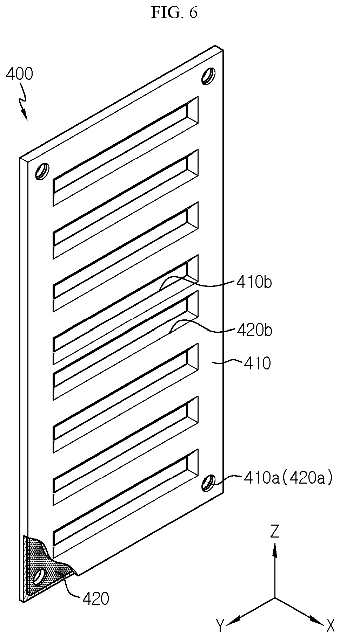

Referring to FIGS. 1 through 6, the fire-proof sheet assembly 400 includes a fire-proof sheet 410 and a sheet cover 420. The same number of fire-proof sheet assemblies 400 as the bus bar frame assemblies 300 may be provided.

The fire-proof sheet 410 may be a sheet formed of a mica material capable of withstanding high-temperature venting gas and sparks and even flames. The fire-proof sheet 410 includes a plurality of sheet slits 410b through which the electrode lead 120 passes.

Even when the bus bar frame 310 formed of a resin material is damaged due to high-temperature venting gas and sparks, the fire-proof sheet 410 may maintain its structure, and thus, positions of the plurality of electrode leads 120 respectively inserted into the plurality of sheet slits 410b may be maintained. Also, the fire-proof sheet 410 may allow high-temperature venting gas to be discharged to the outside through a gap between the sheet slit 410b and the electrode lead 120, and may minimize outward ejection of a high-temperature spark containing active material and aluminum particles. Also, even when the bus bar frame 310 formed of a resin material is damaged, the fire-proof sheet 410 may prevent oxygen from being easily introduced from the outside into the battery module.

Accordingly, the fire-proof sheet 410 may minimize the risk of a fire around the bus bar frame 310 even when an event occurs in the battery module, and even when a fire occurs around the bus bar frame 310, the fire-proof sheet 410 may delay the spread of the fire into the battery module. Also, the fire-proof sheet 410 may prevent an event from spreading due to a short circuit between the battery cells 100 caused by damage to the bus bar frame 310.

The sheet cover 420 completely surrounds the fire-proof sheet 410 so that the fire-proof sheet 410 is not exposed to the outside. This is because the fire-proof sheet 410 formed of a mica material has hygroscopicity, and thus, when the fire-proof sheet 410 formed of a mica material is exposed to external air of the sheet cover 420, the fire-proof sheet 410 may absorb moisture, thereby degrading insulation performance.

The sheet cover 420 may be a resin injection molding product, and in this case, the fire-proof sheet 410 may be located in the sheet cover 420 through insert injection molding. The sheet cover 420 includes a plurality of cover slits 420b through which the electrode lead 120 passes. The cover slit 420b has a shape whose width decreases toward the bus bar frame assembly 300.

This is to, when the sheet cover 420 formed of a resin injection molding product is melted by high-temperature venting gas and sparks, the cover slit 420b is rapidly closed to block the inflow of air from the outside of the battery module. As such, when the inflow of external air is rapidly blocked, the supply of oxygen into the battery module may be blocked, and thus a fire may be prevented from spreading into the battery module.

The cover slit 420b, the sheet slit 410b, and the frame slit 310b are formed at positions corresponding to one another.

When the bus bar frame 310 includes the frame protrusion 310a, the fire-proof sheet 410 and the sheet cover 420 respectively include at least one sheet hole 410a and cover hole 420a formed to have positions and shapes corresponding to the frame protrusion 310a for fastening to the bus bar frame 310.

Although the fire-proof sheet assembly 400 includes both the fire-proof sheet 410 and the sheet cover 420 surrounding the fire-proof sheet 410 in the drawings, the present disclosure is not limited thereto, and the fire-proof sheet assembly 400 may include only the fire-proof sheet 410 without including the sheet cover 420.

A battery pack according to an embodiment of the present disclosure includes the battery module according to an embodiment of the present disclosure. The battery pack may include a plurality of battery modules. An energy storage system (ESS) according to an embodiment of the present disclosure includes the battery pack according to an embodiment of the present disclosure. A vehicle according to an embodiment of the present disclosure includes the battery pack according to an embodiment of the present disclosure. The vehicle includes an electric vehicle.

Although the embodiments of the present disclosure have been illustrated and described above, the present disclosure is not limited to the above-described specific embodiments. Various modified embodiments may be made by one of ordinary skill in the art within the scope of the appended claims.

## Claims

1. A battery module comprising:
a cell stack in which a plurality of battery cells (100) are vertically stacked;
a module housing (200) comprising a base plate (210) supporting the cell stack and a pair of side plates (220) covering both side portions of the cell stack; and
a bus bar frame assembly (300) covering an opening portion formed on a side of the module housing (200) in a longitudinal direction of the module housing (200),
**characterised in that** each of the pair of side plates (220) comprises:
a plurality of spark delay protrusions (220a) protruding from an inner surface of the side plate (220); and
a plurality of spark delay concave portions (220b) recessed from the inner surface of the side plate (220); and
a spark direction changing portion (200a) formed by bending an end portion of the side plate (220) in a longitudinal direction toward the cell stack.

2. The battery module of claim 1, wherein the opening portion is formed between a pair of spark direction changing portions (200a) respectively provided on the pair of side plates (220),
wherein an electrode lead (120) of the battery cell (100) is exposed to outside of the module housing (200) through the opening portion.

3. The battery module of claim 1, wherein the bus bar frame assembly (300) comprises:
a bus bar frame (310) covering the opening portion, and comprising a plurality of frame slits (310b) through which an electrode lead (120) of the battery cell (100) passes; and
at least one bus bar (320) located on an outer surface of the bus bar frame (310) and coupled to the electrode lead (120) passing through the frame slit (310b).

4. The battery module of claim 1, further comprising a fire-proof sheet assembly (400) located between the bus bar frame assembly (300) and the cell stack and coupled to the bus bar frame assembly (300).

5. The battery module of claim 4, wherein the fire-proof sheet assembly (400) comprises a fire-proof sheet (410) comprising a plurality of sheet slits (410b) through which an electrode lead (120) of the battery cell (100) passes.

6. The battery module of claim 5, wherein the fire-proof sheet assembly (400) further comprises a sheet cover (420) comprising a plurality of cover slits (420b) through which the electrode lead (120) of the battery cell (100) passes, and covering the fire-proof sheet (410).

7. The battery module of claim 5, wherein the fire-proof sheet (410) is a mica sheet.

8. The battery module of claim 6, wherein the sheet cover (420) completely covers the fire-proof sheet (410) so that the fire-proof sheet (410) is not exposed to external air.

9. The battery module of claim 6, wherein each of the plurality of cover slits (420b) has a shape whose width decreases toward the bus bar frame assembly (300).

10. The battery module of claim 1, wherein each of the plurality of spark delay protrusions (220a) and each of the plurality of spark delay concave portions (220b) extend in a height direction of the side plate (220), and extend to a length corresponding to the stacked height of the cell stack (100).

11. The battery module of claim 1, wherein the plurality of spark delay protrusions (220a) and the plurality of spark delay concave portions (220b) are alternately formed from a central portion to an end portion of the side plate (220) in a longitudinal direction of the side plate (220).

12. A battery pack comprising the battery module according to any one of claims 1 through 11.

13. An energy storage system (ESS) comprising the battery pack according to claim 12.

14. A vehicle comprising the battery pack according to claim 12.

## Patentansprüche

1. Batteriemodul, umfassend:
einen Zellenstapel, in dem eine Vielzahl von Batteriezellen (100) vertikal gestapelt ist;
ein Modulgehäuse (200), das eine Grundplatte (210), die den Zellenstapel trägt, und ein Seitenplattenpaar (220), das beide Seitenabschnitte des Zellenstapels abdeckt, umfasst; und
eine Sammelschienenrahmenanordnung (300), die einen Öffnungsabschnitt abdeckt, der an einer Seite des Modulgehäuses (200) in einer Längsrichtung des Modulgehäuses (200) gebildet ist,
**dadurch gekennzeichnet ist, dass**
jede des Seitenplattenpaars (220) Folgendes umfasst:
eine Vielzahl von Funkenverzögerungsvorsprüngen (220a), die von einer Innenoberfläche der Seitenplatte (220) vorstehen; und
eine Vielzahl von konkaven Funkenverzögerungsabschnitten (220b), die aus der Innenoberfläche der Seitenplatte (220) ausgespart sind; und
einen Funkenrichtungsveränderungsabschnitt (200a), der durch Biegen eines Endabschnitts der Seitenplatte (220) in einer Längsrichtung zum Zellenstapel hin gebildet ist.

2. Batteriemodul nach Anspruch 1, wobei der Öffnungsabschnitt zwischen einem Paar von Funkenrichtungsveränderungsabschnitten (200a) gebildet ist, die jeweils am Seitenplattenpaar (220) bereitgestellt sind,
wobei eine Elektrodenleitung (120) der Batteriezelle (100) durch den Öffnungsabschnitt an der Außenseite des Modulgehäuses (200) freigelegt ist.

3. Batteriemodul nach Anspruch 1, wobei die Sammelschienenrahmenanordnung (300) Folgendes umfasst:
einen Sammelschienenrahmen (310), der den Öffnungsabschnitt abdeckt und eine Vielzahl von Rahmenschlitzen (310b) umfasst, durch die eine Elektrodenleitung (120) der Batteriezelle (100) durchgeht; und
mindestens eine Sammelschiene (320), die an einer Außenoberfläche des Sammelschienenrahmens (310) gelegen ist und mit der Elektrodenleitung (120), die durch den Rahmenschlitz (310b) durchgeht, gekoppelt ist.

4. Batteriemodul nach Anspruch 1, weiter umfassend eine feuerfeste Blattanordnung (400), die zwischen der Sammelschienenrahmenanordnung (300) und dem Zellenstapel gelegen ist und mit der Sammelschienenrahmenanordnung (300) gekoppelt ist.

5. Batteriemodul nach Anspruch 4, wobei die feuerfeste Blattanordnung (400) ein feuerfestes Blatt (410) umfasst, das eine Vielzahl von Blattschlitzen (410b) umfasst, durch die eine Elektrodenleitung (120) der Batteriezelle (100) durchgeht.

6. Batteriemodul nach Anspruch 5, wobei die feuerfeste Blattanordnung (400) weiter eine Blattabdeckung (420) umfasst, die eine Vielzahl von Abdeckungsschlitzen (420b) umfasst, durch die die Elektrodenleitung (120) der Batteriezelle (100) durchgeht und die das feuerfeste Blatt (410) abdeckt.

7. Batteriemodul nach Anspruch 5, wobei das feuerfeste Blatt (410) ein Glimmerblatt.

8. Batteriemodul nach Anspruch 6, wobei die Blattabdeckung (420) das feuerfeste Blatt (410) vollständig so abdeckt, dass das feuerfeste Blatt (410) nicht Außenluft ausgesetzt ist.

9. Batteriemodul nach Anspruch 6, wobei jeder der Vielzahl von Abdeckungsschlitzen (420b) eine Form aufweist, deren Breite zu der Sammelschienenrahmenanordnung (300) hin abnimmt.

10. Batteriemodul nach Anspruch 1, wobei sich jeder der Vielzahl von Funkenverzögerungsvorsprüngen (220a) und jeder der Vielzahl von konkaven Funkenverzögerungsabschnitten (220b) in einer Höhenrichtung der Seitenplatte (220) erstreckt und sich auf eine Länge erstreckt, die der gestapelten Höhe des Zellenstapels (100) entspricht.

11. Batteriemodul nach Anspruch 1, wobei die Vielzahl von Funkenverzögerungsvorsprüngen (220a) und die Vielzahl von konkaven Funkenverzögerungsabschnitten (220b) von einem Mittelabschnitt zu einem Endabschnitt der Seitenplatte (220) in einer Längsrichtung der Seitenplatte (220) abwechselnd gebildet sind.

12. Batteriesatz, der das Batteriemodul nach einem der Ansprüche 1 bis 11 umfasst.

13. Energiespeichersystem (ESS), das den Batteriesatz nach Anspruch 12 umfasst.

14. Fahrzeug, das den Batteriesatz nach Anspruch 12 umfasst.

## Revendications

1. Module de batterie comprenant :
un empilement de cellules dans lequel une pluralité de cellules de batterie (100) sont empilées verticalement;
un logement de module (200) comprenant une plaque de base (210) supportant l'empilement de cellules et une paire de plaques latérales (220) recouvrant les deux parties latérales de l'empilement de cellules ; et
un ensemble cadre de barre omnibus (300) recouvrant une partie d'ouverture formée sur un côté du logement de module (200) dans une direction longitudinale du logement de module (200),
**caractérisé en ce que**
chacune de la paire de plaques latérales (220) comprend :
une pluralité de saillies de retard d'étincelle (220a) faisant saillie par rapport à une surface intérieure de la plaque latérale (220) ; et
une pluralité de parties concaves de retard d'étincelle (220b) en retrait par rapport à la surface intérieure de la plaque latérale (220) ; et
une partie de changement de direction d'étincelle (200a) formée en pliant une partie d'extrémité de la plaque latérale (220) dans une direction longitudinale vers l'empilement de cellules.

2. Module de batterie selon la revendication 1, dans lequel la partie d'ouverture est formée entre une paire de parties de changement de direction d'étincelle (200a) respectivement prévues sur la paire de plaques latérales (220),
dans lequel un fil d'électrode (120) de la cellule de batterie (100) est exposé à un extérieur du logement de module (200) à travers la partie d'ouverture.

3. Module de batterie selon la revendication 1, dans lequel l'ensemble cadre de barre omnibus (300) comprend :
un cadre de barre omnibus (310) recouvrant la partie d'ouverture, et comprenant une pluralité de fentes de cadre (310b) à travers lesquelles passe un fil d'électrode (120) de la cellule de batterie (100) ; et
au moins une barre omnibus (320) située sur une surface extérieure du cadre de barre omnibus (310) et couplée au fil d'électrode (120) passant à travers la fente de cadre (310b).

4. Module de batterie selon la revendication 1, comprenant en outre un ensemble feuille ignifuge (400) situé entre l'ensemble cadre de barre omnibus (300) et l'empilement de cellules et couplé à l'ensemble cadre de barre omnibus (300).

5. Module de batterie selon la revendication 4, dans lequel l'ensemble feuille ignifuge (400) comprend une feuille ignifuge (410) comprenant une pluralité de fentes de feuille (410b) à travers lesquelles passe un fil d'électrode (120) de la cellule de batterie (100).

6. Module de batterie selon la revendication 5, dans lequel l'ensemble feuille ignifuge (400) comprend en outre un recouvrement de feuille (420) comprenant une pluralité de fentes de recouvrement (420b) à travers lesquelles passe le fil d'électrode (120) de la cellule de batterie (100), et recouvrant la feuille ignifuge (410).

7. Module de batterie selon la revendication 5, dans lequel la feuille ignifuge (410) est une feuille de mica.

8. Module de batterie selon la revendication 6, dans lequel le recouvrement de feuille (420) recouvre complètement la feuille ignifuge (410) de sorte que la feuille ignifuge (410) ne soit pas exposée à un air externe.

9. Module de batterie selon la revendication 6, dans lequel chacune de la pluralité de fentes de recouvrement (420b) présente une forme dont la largeur diminue vers l'ensemble cadre de barre omnibus (300).

10. Module de batterie selon la revendication 1, dans lequel chacune de la pluralité de saillies de retard d'étincelle (220a) et chacune de la pluralité de parties concaves de retard d'étincelle (220b) s'étendent dans une direction de hauteur de la plaque latérale (220), et s'étendent à une longueur correspondant à la hauteur empilée de l'empilement de cellules (100).

11. Module de batterie selon la revendication 1, dans lequel la pluralité de saillies de retard d'étincelle (220a) et la pluralité de parties concaves de retard d'étincelle (220b) sont alternativement formées depuis une partie centrale jusqu'à une partie d'extrémité de la plaque latérale (220) dans une direction longitudinale de la plaque latérale (220).

12. Batterie comprenant le module de batterie selon l'une quelconque des revendications 1 à 11.

13. Système de stockage d'énergie (ESS) comprenant la batterie selon la revendication 12.

14. Véhicule comprenant la batterie selon la revendication 12.
